# DEMANDE DE BREVET EUROPEEN

(11) **EP 1 531 325 A1**
(43) Date de publication de la demande: **18.05.2005**
(21) Numéro de dépôt: 04292506.5
(22) Date de dépôt: 21.10.2004
(51) Int. Cl.: G01N 1/22

(54) **Procédé et dispositif pour prélever des composés gazeux contenus dans un courant gazeux notamment dans des gaz d'échappement dilués d'un moteur à combustion interne**

(30) Priorité: 14.11.2003 FR 0313397
(71) Demandeur: Institut Français du Pétrole, 95852 Rueil-Malmaison cedex (FR)
(72) Inventeur: Pasquereau, Michel, 78500 Sartrouville (FR); Papagni, Jean-François, 78740 Saint-Rémy-lès-Chevreuse (FR); Thoral, Patrick, 95490 Vaureal (FR); Levesque, Richard, 78150 Le Chesnay (FR); Dayde, Laurent, 92150 Suresnes (FR)

(57) **Abrégé**

- La présente invention concerne un procédé et un dispositif pour prélever des composés gazeux contenus dans un courant gazeux, notamment dans des gaz d'échappement dilués d'un moteur à combustion interne.
- Selon l'invention, le procédé consiste à réaliser un passage du courant gazeux dans au moins une voie de prélèvement (26, 26a; 80, 80a) contenant un adsorbant piégeant les hydrocarbures aromatiques polycycliques sous forme gazeuse.

## Description

La présente invention se rapporte à un procédé et à un dispositif de prélèvement de composés gazeux contenus dans un courant gazeux, notamment des hydrocarbures aromatiques polycycliques contenus dans des gaz d'échappement dilués d'un moteur, en particulier à combustion interne.
Plus particulièrement, elle est dirigée vers un procédé et un dispositif de prélèvement à partir de moteurs à combustion interne de cellules d'essai, banc à rouleaux ou banc moteur.

Généralement, certains Hydrocarbures Aromatiques Polycycliques (HAP) sont considérés comme des polluants toxiques pour la santé de l'homme et il est recherché tous moyens pour les identifier, les quantifier et les traiter si nécessaire.
Ces HAP sont présents, notamment dans les gaz d'échappement de moteurs, sous forme gazeuse pour les HAP dont la structure moléculaire est inférieure à quatre cycles ou sous forme condensée sur la phase particulaire de ces gaz pour les HAP avec une structure moléculaire supérieure à quatre cycles.

Il est déjà connu de prélever, d'identifier et de quantifier des HAP condensés sur la phase particulaire contenus dans des gaz d'échappement de moteur à combustion interne, notamment pour véhicules automobiles.
Pour réaliser ces opérations, les gaz d'échappement sont tout d'abord dilués dans un tunnel, puis les particules contenues dans ces gaz sont capturées par un filtre, généralement téflonné. Les particules retenues par ce filtre y sont ensuite extraites par un solvant organique et une partie représentative de la fraction soluble récupérée est analysée par tous moyens, tels que par chromatographie.

Dans certains types de moteurs à combustion interne, notamment ceux fonctionnant à l'essence, les HAP présents sur la phase particulaire sont quasiment inexistants dans les gaz d'échappement et la majorité des HAP est sous forme gazeuse. Dans ce cas, le prélèvement effectué n'est pas représentatif des HAP présents dans les gaz d'échappement.

Il est également connu un procédé de caractérisation indirecte des HAP sous forme gazeuse présents dans les gaz d'échappement grâce à un piégeage des hydrocarbures au-delà de C14. A partir de ces hydrocarbures piégés, les HAP sous forme gazeuse sont extraits selon des protocoles longs, puis identifiés et quantifiés par des matériels d'analyse complexes. Ces différentes opérations peuvent comporter des risques importants de pertes ou de contaminations des HAP.

La présente invention se propose de remédier aux inconvénients mentionnés ci-dessus grâce à un procédé et un dispositif de prélèvement simple et efficace qui permettent de prélever les HAP sous forme gazeuse et de les quantifier grâce à des matériels d'extraction et d'analyse couramment utilisés.

A cet effet, la présente invention concerne un procédé pour prélever des composés gazeux contenus dans un courant gazeux, notamment dans des gaz d'échappement dilués d'un moteur à combustion interne, caractérisé en ce qu'il consiste à réaliser un passage du courant gazeux dans au moins une voie de prélèvement contenant un adsorbant piégeant les hydrocarbures aromatiques polycycliques sous forme gazeuse.

Avantageusement, ce procédé peut consister à réaliser une filtration du courant gazeux avant son passage au travers de l'adsorbant.

Il peut consister à réaliser un passage du courant gazeux dans une première voie de prélèvement, à interrompre le passage du courant gazeux dans la première voie de prélèvement et à réaliser un passage du courant gazeux dans une deuxième voie de prélèvement.

Dans le cas où le courant gazeux est préalablement dilué par un air de dilution, le procédé peut consister à réaliser un passage de l'air de dilution dans au moins une voie de prélèvement contenant un adsorbant piégeant les hydrocarbures aromatiques polycycliques sous forme gazeuse.

Il peut également consister à réaliser un passage de l'air de dilution dans une première voie de prélèvement, à interrompre le passage de l'air de dilution dans ladite première voie de prélèvement et à réaliser un passage de cet air dans une deuxième voie de prélèvement.

De manière préférentielle, il peut consister à filtrer l'air de dilution avant son passage au travers de l'adsorbant.

On peut utiliser un adsorbant contenant une résine à base de polymères poreux.

Cette résine peut être une résine avec une matrice de type styrène/divinylbenzène polyaromatique.

L'invention concerne également un dispositif de prélèvement de composés gazeux contenus dans un courant gazeux, notamment dans des gaz d'échappement dilués d'un moteur à combustion interne, caractérisé en ce qu'il comprend une unité de prélèvement munie d'au moins un circuit de prélèvement comprenant au moins un moyen de prélèvement contenant un adsorbant piégeant les hydrocarbures aromatiques polycycliques sous forme gazeuse contenus dans ledit courant.

Le circuit de prélèvement peut comprendre un moyen de filtration de l'air de dilution avant son mélange avec le courant gazeux, lorsque ledit courant gazeux contient un tel air de dilution.

Le circuit de prélèvement peut comprendre au moins un moyen de prélèvement contenant un adsorbant piégeant les hydrocarbures aromatiques polycycliques sous forme gazeuse contenus dans ledit air de dilution.

Le moyen de prélèvement peut comprendre au moins une cartouche renfermant l'adsorbant.

L'adsorbant peut comprendre une résine à base de polymères poreux.

Le circuit de prélèvement peut comprendre un moyen de filtration du courant gazeux.

L'unité de prélèvement peut comprendre deux circuits de prélèvement et des moyens de vannage pour mettre en action l'un ou l'autre des circuits de prélèvement.

Le dispositif peut comprendre une unité de commande de l'unité de prélèvement.

Les autres caractéristiques et avantages de l'invention apparaîtront mieux à la lecture de la description qui va suivre, donnée uniquement à titre illustratif et nullement limitatif, en se référant aux dessins annexés sur lesquels :
- la figure 1 est une vue schématique d'un dispositif de prélèvement selon l'invention dans une première configuration,
- la figure 2 est une vue en coupe transversale d'une cartouche utilisée dans le dispositif de la figure 1 et
- la figure 3 est une vue schématique du dispositif de prélèvement selon l'invention dans une autre configuration.

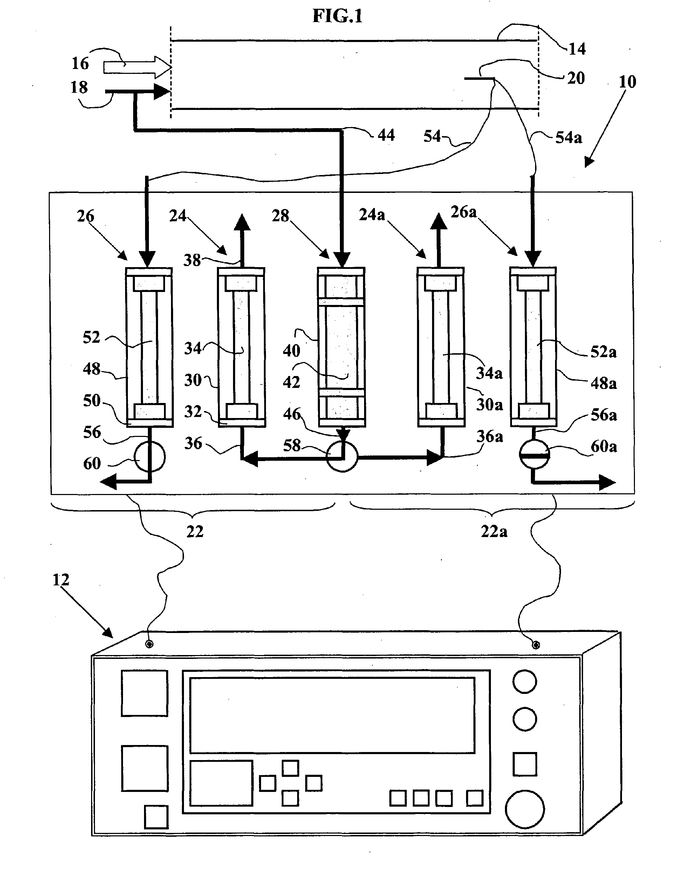

Sur la figure 1, le dispositif de prélèvement des Hydrocarbures Aromatiques Polycycliques (HAP) sous forme gazeuse contenus dans un courant gazeux, comme des gaz d'échappement dilués d'un moteur à combustion interne placé sur un banc à rouleaux, comprend une unité de prélèvement 10 et une unité de contrôle 12 de l'unité 10.

Ce dispositif de prélèvement est associé à un tunnel de prélèvement 14, qui, dans la configuration "banc à rouleaux", est un tunnel de dilution plein débit, dans lequel circulent les gaz d'échappement 16 issus du moteur à combustion interne. Ce tunnel est alimenté en air de dilution, généralement de l'air ambiant traité, par une conduite 18 de façon à obtenir, au niveau de la tête de prélèvement 20 située à proximité de la sortie de ce tunnel, des gaz d'échappement dilués répondant aux critères habituels de prélèvement (température, teneur en eau, ...).

L'unité de prélèvement 10 comprend au moins un circuit de prélèvement 22 des HAP sous forme gazeuse, ici deux, comportant chacun deux voies de prélèvement, une voie 24 pour prélever les HAP contenus dans l'air de dilution et une voie 26 pour les HAP contenus dans les gaz d'échappement dilués ainsi qu'une voie de filtration 28 de l'air de dilution.

La voie de prélèvement 24 des HAP contenus dans l'air de dilution comprend une unité de captation 30 comportant un support 32 dans lequel est placé une cartouche de prélèvement amovible 34. La cartouche 34 est traversée par de l'air de dilution préalablement filtré par la voie de filtration 28 et amené par une conduite 36. Une conduite 38 permet d'évacuer l'air de dilution après captation des HAP vers tous dispositifs connus.
La voie de filtration 28 comprend une unité de filtration 40 avec au moins au moins un filtre 42 prévus pour capturer toutes les impuretés contenues dans l'air de dilution qui traverse ce filtre. L'entrée de l'unité de filtration 40 est raccordée par une conduite 44 à la conduite d'air de dilution 18 et la sortie de cette unité est connectée par une conduite de sortie 46 à la conduite 36 menant à l'entrée de l'unité de captation 30.
La voie de prélèvement 26 des HAP contenus dans les gaz d'échappement dilués prélevés par la tête 20 comprend une unité de captation 48 avec un support 50 dans lequel est placé une cartouche de prélèvement amovible 52. L'entrée de l'unité de captation 48 est raccordée par une conduite 54 à la tête de prélèvement 20 des gaz dilués et la sortie de cette unité est connectée par une conduite 56 à tous moyens connus permettant d'évacuer et de traiter les gaz d'échappement. Comme cela est connu en soi, les gaz d'échappement circulant dans la conduite 54 sont déjà filtrés, de manière avantageuse en aval de la tête 20, ce qui permet d'éliminer les impuretés qui seraient susceptibles de colmater la cartouche de prélèvement 50.
De manière avantageuse, les supports 32, 50 et les cartouches 34, 52 peuvent être identiques pour les deux voies de prélèvement.

Comme montré sur la figure 1, l'unité de prélèvement 10 comporte un deuxième circuit de prélèvement 22a des HAP sous forme gazeuse comportant deux voies de prélèvement 24a, 26a avec les mêmes composants que ceux décrit avec le circuit 22. Bien entendu pour des raisons de simplification du dispositif, la même voie de filtration 28 est utilisé pour le circuit 22a. Ceci permet de réaliser deux prélèvements distincts successifs sans avoir à interrompre ni le processus de prélèvement des HAP ni le fonctionnement du moteur. Pour ce faire, il est prévu un moyen de vannage 58, tel qu'une vanne trois voies, sur la conduite de sortie 46 de l'unité de filtration 40 qui permet de mettre alternativement en communication soit la conduite 36 soit la conduite 36a. De même, les conduites 56 et 56a seront munies chacune d'un moyen de vannage 60 et 60a, tel qu'une vanne deux voies de type rotatif ou autres, permettant d'autoriser ou d'interrompre l'alimentation en gaz d'échappement dilués dans les unités de captation 48 et 48a. Les vannes 60 et 60a sont commandées d'une façon telle qu'ils ne soient jamais simultanément en position d'ouverture ou de fermeture. Ainsi, lorsque le circuit de prélèvement 22 est opérationnel, la conduite 36 est en communication avec la conduite 46 par action de la vanne 58, la vanne 60 est en position d'ouverture pour admettre les gaz d'échappement dans la voie de prélèvement 26 et la vanne 60a est en position de fermeture pour interdire la circulation de ces gaz dans la voie de prélèvement 26a.

L'unité de commande/contrôle 12 permet, de manière connue en soi, de paramétrer, de contrôler et/ou commander en permanence les conditions de prélèvement, telles que le débit, la pression et la température des gaz d'échappement et/ou d'air de dilution admis à l'entrée des unités de captation, la durée des prélèvements, la mise en action de l'autre circuit de prélèvement 22a dans le cas d'une unité de prélèvement à deux circuits par action sur les moyens de vannage 58, 60 et 60a. Cette unité commande également tous les organes liés au fonctionnement de cette unité de prélèvement, comme les pompes permettant la circulation du courant gazeux dans les voies de filtration 26, 28 et de prélèvement 24 de l'air de dilution.
Elle comprend également les alarmes sonores et/ou visuelles permettant de déceler un éventuel dysfonctionnement ou un non-respect d'un paramètre programmé.

Durant le processus de prélèvement dans la configuration de la figure 1 correspondant à un véhicule utilisé sur un banc à rouleaux, seul le circuit de prélèvement 22 est utilisé. Dans cette configuration, la vanne 60 est en position d'ouverture, la vanne 58 est actionnée de manière à mettre en communication la conduite de sortie 46 de la voie de filtration 28 avec la conduite d'entrée 36 de la voie de prélèvement 24 et la vanne 60a est en position de fermeture.
Les gaz d'échappement 16 issus du moteur à combustion interne de ce véhicule sont mélangés dans le tunnel 14 avec de l'air de dilution amené par la conduite 18. Une partie de cet air de dilution est envoyée, avant son introduction dans le tunnel 14, par la conduite 44 dans l'unité de filtration 28 de manière à le débarrasser des impuretés qu'il contient, comme les poussières. Cet air de dilution filtré est ensuite envoyé dans l'unité de captation 30 des HAP sous forme gazeuse et traverse la cartouche de prélèvement 34. Les HAP sous forme gazeuse sont capturés par l'adsorbant contenu dans cette cartouche et l'air de dilution dépourvu en grande partie des HAP est évacué à la sortie de l'unité 30 par la conduite 38 vers tous moyens connus. Simultanément, les gaz d'échappement dilués, préalablement filtrés, sont prélevés à proximité de la sortie de ce tunnel 14 par la tête 20 et sont envoyés par la conduite 54 dans l'unité de captation 48 des HAP sous forme gazeuse. Ces gaz traversent la cartouche 52 et les HAP sous forme gazeuse présents dans ces gaz sont retenus par l'adsorbant contenu dans cette cartouche. Les gaz d'échappement débarrassés des HAP sont ensuite évacués par la conduite 56 vers tous moyens connus pour leurs traitements avant rejet dans l'atmosphère.
Ainsi, durant ce processus, les HAP contenus à la fois dans l'air de dilution et dans les gaz d'échappement dilués sont prélevés par deux cartouches disposées en parallèles.

Comme indiqué plus haut, il est possible d'effectuer deux prélèvements successifs des HAP et cela sans interrompre le fonctionnement du moteur du véhicule et de l'appareil de prélèvement. Après un premier prélèvement des HAP effectué dans le circuit de prélèvement 22 par les cartouches des unités de captation 30 et 48, il suffit d'arrêter ce prélèvement en agissant sur les moyens de vannages 58 et 60 de façon à interrompre la circulation de l'air de dilution et des gaz d'échappement dilués au travers des différentes voies de filtration et de prélèvement. A la suite de cet arrêt, un deuxième prélèvement des HAP contenus dans l'air de dilution et dans les gaz d'échappement dilués peut être effectué dans le circuit de prélèvement 22a par les unités de captation 30a et 48a en agissant sur l'ouverture des moyens de vannages 58, 60a. Dans cette configuration, la voie de filtration 28 utilisée pour le premier prélèvement sera avantageusement utilisé également pour réaliser le deuxième prélèvement.

Une fois que le prélèvement des HAP est terminé, les cartouches 34, 52 sont démontées de leurs supports 32, 50. Ces cartouches sont ensuite traitées pour en extraire les HAP grâce à un solvant, tel que du dichlorométhane ou du toluène. Avantageusement, cette extraction est réalisée en utilisant un système d'extraction par solvant accélérée (ASE) qui a pour avantage d'employer une très faible quantité de solvant, ce qui permet d'éviter une reconcentration de l'adsorbant. De plus, le système d'extraction est adapté à la configuration des cartouches de manière à éviter tout démontage de leurs éléments constitutifs ou tout transfert de l'adsorbant qu'elles contiennent.

Les HAP extraits pour chaque cartouche sont analysés par tous moyens, en particulier par le couplage d'une chromatographie avec une spectrométrie de masse ou par une chromatographie liquide haute performance, de façon à identifier et quantifier les HAP contenus dans l'air de dilution et dans les gaz d'échappement dilués.

Après ces analyses, l'identification et la quantification des HAP sous forme gazeuse finalement contenus dans les gaz d'échappement sont déterminées après déduction des HAP identifiés et quantifiés de l'air de dilution.

Avantageusement, ce dispositif de prélèvement sera associé à tous dispositifs connus permettant de prélever, identifier et quantifier les HAP condensés sur la forme particulaire des gaz d'échappement.
Ainsi, la présente invention permet de compléter la connaissance des HAP condensés sur la phase particulaire contenus dans les gaz d'échappement par l'identification et la quantification des HAP sous forme gazeuse.

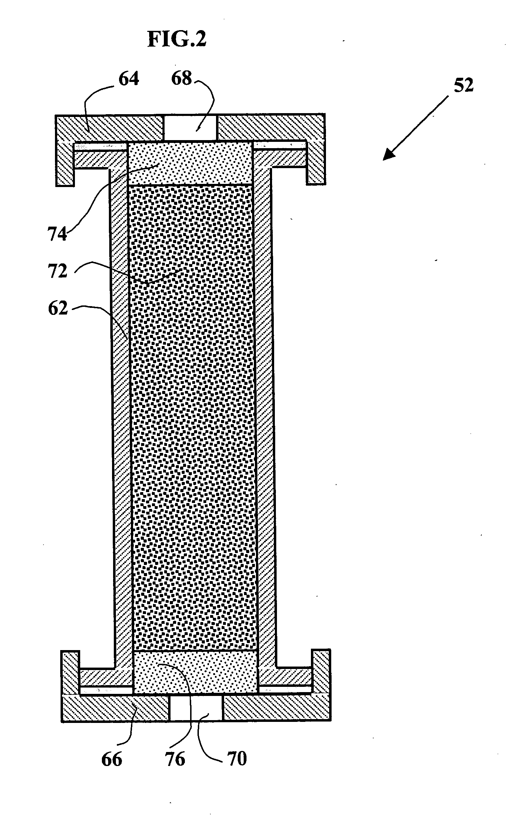

La figure 2 montre un exemple de réalisation de la cartouche de prélèvement 52 qui est utilisée dans l'unité de captation 48 des HAP contenus dans les gaz d'échappement. Avantageusement, ce même type de cartouche peut être utilisé dans l'unité de captation 30 des HAP de l'air de dilution ainsi que dans les unités de captation 30a et 48a. Comme déjà évoqué, ces types de cartouche permettent une adaptation rapide, simple et sans manipulation de l'absorbant par le système d'extraction mis en oeuvre.

Cette cartouche 52 comprend un corps tubulaire sensiblement cylindrique 62 fermé à ses extrémités par deux couvercles amovibles 64, 66. Chaque couvercle est muni d'un alésage 68, 70 permettant de mettre en communication l'intérieur du corps 62 avec respectivement l'arrivée de gaz d'échappement par la conduite 54 et l'évacuation de ces gaz par la conduite 56. Les couvercles sont fixés à étanchéité sur le corps 62 par tous moyens connus, tels que par vissage. Le corps contient dans son volume creux un adsorbant 72 constitué de résine à base de polymères poreux, plus connu sous le nom d'Amberlite. A titre d'exemple, l'adsorbant est du type commercialisé sous le vocable XAD2 Supelpak et comprend une résine avec une matrice de type styrène/divinylbenzène polyaromatique. Un lit de laine de quartz 74, 76 est disposé entre chaque couvercle 64, 66 et l'adsorbant 72 de manière à immobiliser cet adsorbant à l'intérieur du corps 62 tout en ne pénalisant pas la circulation des gaz d'échappement au travers de ces lits.
Avantageusement, les alésages 68, 70 sont configurés d'une manière telle qu'ils permettent d'être obturés par tous moyens connus, tels que des bouchons à joint torique, après le démontage de la cartouche hors de son support.

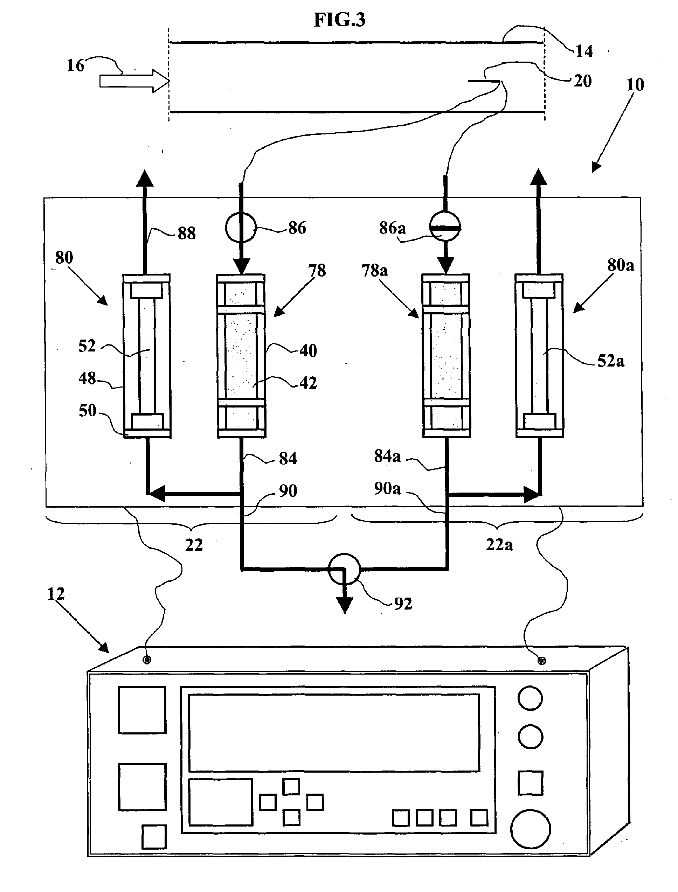

On se réfère maintenant à la figure 3 qui montre le dispositif de prélèvement dans une autre configuration, dite banc moteur.
Dans cette configuration, l'unité de prélèvement 10 comprend également deux circuits de prélèvement 22 et 22a et est associée à un microtunnel 14 qui contient un air de dilution qui est déjà purifié et filtré.
Chaque circuit de prélèvement comprend une voie de filtration 78 des gaz d'échappement connectée à une voie de prélèvement 80 des HAP sous forme gazeuse contenus dans les gaz d'échappement filtrés.
La voie de filtration 78 comprend une unité de filtration 40 semblable à celle décrite précédemment avec au moins un filtre 42 prévus pour capturer toutes les impuretés contenues dans les gaz d'échappement dilués qui traversent ce filtre, une conduite d'entrée 82 des gaz d'échappement amenant ces gaz de la tête 20 à l'entrée de l'unité 40 et une conduite de sortie 84 des gaz d'échappement filtrés. La conduite d'entrée porte un moyen de vannage 86, sous la forme d'une vanne, permettant d'autoriser ou d'interdire l'arrivée des gaz d'échappement dilués dans cette unité de filtration 40.
La voie de prélèvement 80 comprend également une unité de captation 48, semblable à l'unité de captation de la figure 1, avec un support 50 portant une cartouche de prélèvement amovible 52. L'entrée de l'unité de captation 48 est connectée à la conduite 84 de sortie des gaz filtrés et la sortie de cette unité est reliée à une conduite 88 pour évacuer les gaz d'échappement dilués dépourvus de HAP.
De manière préférentielle, la conduite 84 peut comprendre une conduite en dérivation 90 permettant d'évacuer une partie des gaz d'échappement dilués et filtrés, notamment vers le système de contrôle du microtunnel (non représenté). Dans ce cas, il est prévu un moyen de vannage 92, comme une vanne trois voies, permettant de mettre en communication sélectivement la conduite 90 ou la conduite 90a avec le système de contrôle du microtunnel.

En fonctionnement, tel qu'illustré à titre d'exemple sur la figure 3, seul le circuit de prélèvement 22 est utilisé. Dans cette configuration, la vanne 86 est en position d'ouverture de façon à mettre en communication, grâce à la conduite 82, les gaz prélevés par la tête 20 avec l'unité de filtration 40 et la vanne 92 est dans une position telle que la conduite 90 permet d'évacuer une partie des gaz d'échappement après filtration. Ces gaz dilués traversent l'unité de filtration 40 de manière à être débarrassés des impuretés qu'ils contiennent. Ces gaz d'échappement filtrés sont ensuite envoyés dans l'unité de captation 48 des HAP sous forme gazeuse par la conduite 84 en ayant au préalable traversés la cartouche de prélèvement 52 et également dans la conduite 90. Les HAP sous forme gazeuse sont recueillis par l'adsorbant contenu dans cette cartouche et les gaz d'échappement dépourvus de HAP sont évacués par la conduite 88 vers tous moyens connus.
Comme déjà indiqué plus haut dans la configuration de la figure 1, il est possible d'effectuer deux prélèvements successifs des HAP sans avoir la nécessité d'interrompre le fonctionnement du moteur du véhicule et du dispositif de prélèvement. Ainsi, après le premier prélèvement des HAP effectué dans le circuit de prélèvement 22 par l'unité de captation 48, il suffit d'interrompre la circulation des gaz d'échappement dans la voie de filtration par fermeture de la vanne 86. A la suite de cette fermeture, la vanne 92 est actionnée pour permettre la circulation des gaz filtrés dans la conduite 90a et la vanne 86a peut être ouverte pour permettre la circulation des gaz d'échappement dilués dans la voie de filtration 78a ainsi que dans la voie de prélèvement 80a.
Une fois que les prélèvements des HAP sont terminés, la cartouche 52 est démontée de son support 50 pour être traitée dans le but d'en extraire, identifier et quantifier les HAP comme cela a été décrit pour la figure 1.

Egalement, ce dispositif de prélèvement sera associé à tous dispositifs connus permettant de prélever, identifier et quantifier les HAP présents sous forme condensée dans la phase particulaire de ces gaz.

## Revendications

1. Procédé pour prélever des composés gazeux contenus dans un courant gazeux, notamment dans des gaz d'échappement dilués d'un moteur à combustion interne, **caractérisé en ce qu'**il consiste à réaliser un passage du courant gazeux dans au moins une voie de prélèvement (26, 26a; 80, 80a) contenant un adsorbant piégeant les hydrocarbures aromatiques polycycliques sous forme gazeuse.

2. Procédé selon la revendication 1, **caractérisé en ce qu'**il consiste à réaliser une filtration du courant gazeux avant son passage au travers de l'adsorbant.

3. Procédé selon l'une quelconque des revendications précédentes, **caractérisé en ce qu'**il consiste à réaliser un passage du courant gazeux dans une première voie de prélèvement (26, 80), à interrompre le passage du courant gazeux dans la première voie de prélèvement et à réaliser un passage du courant gazeux dans une deuxième voie de prélèvement (26a, 80a).

4. Procédé selon l'une quelconque des revendications précédentes dans lequel ledit courant est dilué par un air de dilution, **caractérisé en ce qu'**il consiste à réaliser un passage de l'air de dilution dans au moins une voie de prélèvement (24) contenant un adsorbant piégeant les hydrocarbures aromatiques polycycliques sous forme gazeuse.

5. Procédé selon la revendication 4, **caractérisé en ce qu'**il consiste à réaliser un passage de l'air de dilution dans une première voie de prélèvement (24), à interrompre le passage de l'air de dilution dans ladite première voie de prélèvement et à réaliser un passage de cet air dans une deuxième voie de prélèvement (24a).

6. Procédé selon la revendication 4 ou 5, **caractérisé en ce qu'**il consiste à filtrer l'air de dilution avant son passage au travers de l'adsorbant.

7. Procédé selon l'une des revendications précédentes, **caractérisé en ce qu'**on utilise un adsorbant contenant une résine à base de polymères poreux.

8. Procédé selon la revendication 7, **caractérisé en ce qu'**on utilise une résine avec une matrice de type styrène/divinylbenzène polyaromatique.

9. Dispositif de prélèvement de composés gazeux contenus dans un courant gazeux, notamment dans des gaz d'échappement d'un moteur à combustion interne, **caractérisé en ce qu'**il comprend une unité de prélèvement (10) munie d'au moins un circuit de prélèvement (22) comprenant au moins un moyen de prélèvement (34, 52) contenant un adsorbant piégeant les hydrocarbures aromatiques polycycliques sous forme gazeuse contenus dans ledit courant.

10. Dispositif selon la revendication 9 dans lequel le courant gazeux contient un air de dilution, **caractérisé en ce que** le circuit de prélèvement (22) comprend un moyen de filtration (40, 42) de l'air de dilution avant son mélange avec le courant gazeux.

11. Dispositif selon la revendication 10, **caractérisé en ce que** le circuit de prélèvement (22) comprend au moins un moyen de prélèvement (34, 52) contenant un adsorbant piégeant les hydrocarbures aromatiques polycycliques sous forme gazeuse contenus dans ledit air de dilution.

12. Dispositif selon l'une des revendications 9 à 11, **caractérisé en ce que** le moyen de prélèvement comprend au moins une cartouche (34, 52) renfermant l'adsorbant.

13. Dispositif selon l'une des revendications 9 à 12, **caractérisé en ce que** l'adsorbant comprend une résine à base de polymères poreux.

14. Dispositif selon l'une des revendications 9 à 11, **caractérisé en ce que** le circuit de prélèvement (22) comprend un moyen de filtration (40, 42) du courant gazeux.

15. Dispositif selon la revendication 1, **caractérisé en ce que** l'unité de prélèvement (10) comprend deux circuits de prélèvement (22, 22a) et des moyens de vannage (58, 60; 86, 92) pour mettre en action l'un ou l'autre des circuits de prélèvement.

16. Dispositif selon l'une des revendications précédentes, **caractérisé en ce qu'**il comprend une unité de commande (12) de l'unité de prélèvement (10).
